# EUROPÄISCHE PATENTANMELDUNG

(11) **EP 3 187 467 A1**
(43) Veröffentlichungstag der Anmeldung: **05.07.2017**
(21) Anmeldenummer: 15202997.1
(22) Anmeldetag: 29.12.2015
(51) Int. Cl.: C02F 1/34, C02F 1/78, B01J 19/00, B01J 19/10

(54) **KAVITATIONSREAKTOR ZUM BEHANDELN VON FLIESSFÄHIGEN SUBSTANZEN**

(71) Anmelder: AVARUS Suisse Holding AG, 6052 Hergiswil NW (CH)
(72) Erfinder: Schüler, Rolf, 85258 Weichs (DE)
(74) Vertreter: Puschmann Borchert Bardehle Patentanwälte Partnerschaft mbB

(57) **Zusammenfassung**

Ein Kavitationsreaktor zum Behandeln von flüssigen und/oder gasförmigen Substanzen, wobei dem Kavitationsreaktor wenigstens zwei Reaktionskomponenten zugeführt, gemischt und zur Reaktion gebracht werden, wobei der Kavitationsreaktor umfasst ein rohrförmiges Gehäuse (2), mit dem in Strömungsrichtung (H) stromab eine Zulaufeinrichtung (4) verbunden ist, die die zugeführte Haupt-Komponente als mittig in dem Gehäuse (2) verlaufenden Strahl in Strömungsrichtung (H) abgibt, und in dem ein der Zulaufeinrichtung (4) mittig gegenüberliegender Düsenkopf (6) angeordnet sind, der mehrere Kanäle aufweist, deren Mündungen unter unterschiedlichen radialen Abständen zu einer Mittelachse des Düsenkopfes (6) liegen und durch die wenigstens eine Zugabe-Komponente entgegen der Strömungsrichtung (H) der Haupt-Komponente zuzuführen ist, wobei durch die Beabstandung der Zulaufeinrichtung (4) von dem Düsenkopf (6) ein Reaktionsraum (14) in dem Gehäuse (2) gebildet ist, und wobei die Zulaufeinrichtung (4) ein Zulaufgehäuse (16) mit einem mittigen Zulaufkanal (18) aufweist, der sich von einer eintrittsseitigen Zulauföffnung (24) aus mit einem in Strömungsrichtung (H) trichterförmig ausgebildeten Erweiterungsabschnitt (22) bis zu dem rohrförmigen Gehäuse (2) erstreckt.

## Beschreibung

Die Erfindung betrifft einen Kavitationsreaktor zum Behandeln von fließfähigen Substanzen, wobei dem Kavitationsreaktor wenigstens zwei Reaktionskomponenten zugeführt, gemischt und zur Reaktion gebracht werden.

DE 20 2010 000 075 U1 zeigt eine Vorrichtung zur Behandlung von fließfähigen Substanzen, wobei dem Kavitationsreaktor wenigstens zwei Reaktionskomponenten zugeführt, mittels turbulenter Strömungen bzw. Kavitation gemischt und zur Reaktion gebracht werden. Die Vorrichtung hat ein Gehäuse, in dem in Strömungsrichtung eine Zulaufdüse, die die zugeführte Haupt-Komponente als mittig in dem Gehäuse verlaufenden Strahl in Strömungsrichtung abgibt, und ein der Zulaufdüse mittig gegenüberliegender Düsenkopf angeordnet sind, der Kanäle zur Abgabe einer Zugabe-Komponente entgegen der Strömungsrichtung der Haupt-Komponente aufweist, wobei durch Beabstandung der Zulaufdüse von dem Düsenkopf ein Reaktionsraum in dem Gehäuse gebildet ist. Das Gehäuse ist als Rohr ausgebildet, das im Bereich des Düsenkopfes eine Verengung aufweist und in dem die Zulaufdüse, die eine sich in Strömungsrichtung verengende, vorzugsweise konische, Wand aufweist, angeordnet ist. Der Düsenkopf hat mehrere Kanäle, deren Mündungen unter unterschiedlichen radialen Abständen zu einer Mittelachse des Düsenkopfes liegen, und auf der dem Reaktionsraum zugewandten Seite der Zulaufdüse in Abstand dazu eine mit seitlichen Öffnungen versehene, vorzugsweise ebenfalls konische, Trennwand mit einer Austrittsöffnung vor der Düsenöffnung der Zulaufdüse angeordnet ist, wobei die Austrittsöffnung der Trennwand größer ist als die Düsenöffnung der Zulaufdüse.

Hydrodynamische Durchflussreaktoren, die auf der Basis von Kavitation arbeiten, sind auch aus der DE 103 10 442 A1 bekannt, die durch eine entsprechende Anordnung von schwer umströmbaren Körper als Superkavitationsreaktoren ausgebildet werden können. Hierbei handelt es sich meist um statische Bauteile, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der Turbulenz erzeugenden Elemente erreicht. Bei diesen hydrodynamischen Reaktoren nach dem Stand der Technik ist daher die Auslegung und die Handhabung umständlich, und den Gegebenheiten diverser Anwendungen kann nur begrenzt Rechnung getragen werden.

Der Erfindung liegt die Aufgabe zu Grunde, einen Kavitationsreaktor zum Behandeln von fließfähigen Substanzen, dem wenigstens zwei Reaktionskomponenten zugeführt, gemischt und zur Reaktion gebracht werden, in Bezug auf Effizienz und Einfachheit der Auslegung zu verbessern.

Dazu dient der erfindungsgemäße Kavitationsreaktor, der umfasst: ein rohrförmiges Gehäuse, mit dem in Strömungsrichtung stromab eine Zulaufeinrichtung verbunden ist, die die zugeführte Haupt-Komponente als mittig in dem Gehäuse verlaufenden Strahl in Strömungsrichtung abgibt, und in dem ein der Zulaufeinrichtung mittig gegenüberliegender Düsenkopf angeordnet ist, der mehrere Kanäle aufweist, deren Mündungen unter unterschiedlichen radialen Abständen zu einer Mittelachse des Düsenkopfes liegen und durch die eine Zugabe-Komponente entgegen der Strömungsrichtung der Haupt-Komponente zuzuführen ist, wobei durch die Beabstandung der Zulaufeinrichtung von dem Düsenkopf ein Reaktionsraum in dem Gehäuse gebildet ist, und wobei die Zulaufeinrichtung ein Zulaufgehäuse mit einem mittigen Zulaufkanal aufweist, der sich von einer eintrittsseitigen Zulauföffnung aus mit einem in Strömungsrichtung trichterförmig ausgebildeten Erweiterungsabschnitt bis zu dem rohrförmigen Gehäuse erstreckt.

Durch den erfindungsgemäßen Kavitationsreaktor wird ein Gegenstromsystem verwirklicht, in dem die von der Zulaufeinrichtung abgegebene Strömung auf den Düsenkopf auftrifft und sodann entgegen der Hauptströmungsrichtung, d. h. in Richtung auf die Zulaufeinrichtung, zurückgeworfen wird, wobei die Komponente, die durch die Kanäle in dem Düsenkopf in das System eingeführt wird, der Strömung eine zusätzliche Kraftkomponente in Richtung auf die Zulaufeinrichtung erteilt. Da die Mündungen der Kanäle unterschiedliche radiale Abstände von der Mittelachse des Düsenkopfes haben, wirkt die durch das aus den Kanälen austretende Strömungsmittel erteilte Kraftkomponente großflächig, und es findet eine innige Vermischung der beiden Komponenten in dem Reaktionsraum statt, was die Behandlung der einen Komponente, beispielsweise Abwasser, durch die andere Komponente, beispielsweise Ozon, erst ermöglicht oder zumindest erheblich beschleunigt. Dabei kann das Abwasser sowohl von Verunreinigungen befreit als auch desinfiziert werden. Ein weiteres Beispiel ist die Behandlung von Dieselkraftstoff mit Methan, Erdgas oder Biogas zum Zwecke der Umsetzung des Gases in zusätzlichen Treibstoff und zur Aufbereitung des Dieselkraftstoffs selbst, wobei die Aufbereitung durch Kavitation den bisherigen Verfahren zur Aufbereitung von Dieselkraftstoff weit überlegen ist. Die Effizienz der Vorrichtung wird insbesondere durch die hohe Turbulenz in den Strömungen und damit durch Kavitation in einer solchen Weise erhöht, dass auch die Auslegung der Vorrichtung vereinfacht wird, indem die Vorrichtungen in einer einzigen Ausgestaltung für eine Reihe von Anwendungsfällen geeignet ist.

Eine vorteilhafte Ausgestaltung des erfindungsgemäßen Kavitationsreaktors ist dadurch gekennzeichnet, dass der Zulaufkanal eintrittsseitig einen zylindrischen Kanalabschnitt aufweist, an den sich in Strömungsrichtung der Erweiterungsabschnitt anschließt, wobei die Zulaufeinrichtung eine mittig in das Gehäuse gerichtete Strömung der Haupt-Komponente abgibt. Durch den zylindrischen Kanalabschnitt wird die aus dem Kanalabschnitt austretende Hauptkomponente zu einem mittigen Strahl geformt, der in dem Erweiterungsabschnitt der Zulaufeinrichtung radialgerichtete Bewegungskomponenten erhält und damit bereits für eine Verkörperung der Haupt-Komponenten sorgt, sodass der Ablauf der Kavität bereits beim Eintritt in den Reaktionsraum begünstigt wird.

Eine weitere vorteilhafte Ausgestaltung des erfindungsgemäßen Kavitationsreaktors ist dadurch gekennzeichnet, dass das Zulaufgehäuse mehrere parallel zur Strömungsrichtung verlaufende Hilfs-Zulaufkanäle aufweist, die eintrittsseitig unter radialen Abständen zu dem Zulaufkanal liegen und in dem konischen Erweiterungsabschnitt enden. In Versuchen hat sich gezeigt, dass die Hilfs-Zulaufkanäle zu einer noch stärkeren Verwirbelung und Vermischung der Reaktions-Komponenten in dem Reaktionsraum führt, indem dort Wirbelströme entstehen. Andererseits kann beim Einsatz der Hilfs-Zulaufkanäle der zum Betreiben der Vorrichtung erforderliche Druck deutlich herabgesetzt werden. Während eine Vorrichtung ohne die Hilfs-Zulaufkanäle beispielsweise 8 bar benötigt, kommt die Vorrichtung mit den Hilfs-Zulaufkanälen mit 0,8 bar aus, was für das Betreiben der Vorrichtung außerordentlich vorteilhaft ist.

Eine weitere vorteilhafte Ausgestaltung des erfindungsgemäßen Kavitationsreaktors ist dadurch gekennzeichnet, dass das Gehäuse als zylindrisches Rohr ausgebildet ist. Damit wird in vorteilhafter Weise erreicht, dass das Gehäuse ein einfaches Rohr sein kann ohne dass es erforderlich wäre, das Gehäuse in irgendeiner Weise speziell auszubilden bzw. zu profilieren.

Eine weitere vorteilhafte Ausgestaltung des erfindungsgemäßen Kavitationsreaktors ist dadurch gekennzeichnet, dass in der Mitte des Düsenkopfes eine Prallfläche ohne Kanäle für den von der Zulaufeinrichtung abgegebenen Strahl vorgesehen ist. Indem der aus der Zulaufeinrichtung austretende Strahl nicht auf einen Kanal in dem Düsenkopf sondern auf die Prallfläche auftrifft, wird die Strömungsumkehr des aus der Zulaufeinrichtung austretenden Strahles mit Sicherheit erreicht. Außerdem trifft das Strömungsmittel, das aus den Kanälen des Düsenkopfes austritt, in einem Bereich seitlich von dem von der Zulaufeinrichtung abgegebenen Hauptstrahl auf die rückläufige Strömung auf, was die Strömungskinetik in dem Reaktionsraum verbessert.

Eine weitere vorteilhafte Ausgestaltung des erfindungsgemäßen Kavitationsreaktors ist dadurch gekennzeichnet, dass die Kanäle des Düsenkopfes außerhalb der Prallfläche auf Kreisen mit unterschiedlichen Radien zu der Mittelachse des Düsenkopfes angeordnet sind. Dadurch wird eine gleichmäßige flächige Verteilung der Mündungen der Kanäle in dem Düsenkopf erreicht, was eine ebenso vorteilhafte flächige Verteilung der aus den Kanälen austretenden Strömungsmittel bewirkt.

Eine weitere vorteilhafte Ausgestaltung des erfindungsgemäßen Kavitationsreaktors ist dadurch gekennzeichnet, dass die Mündungen der Kanäle auf einer Einhüllendenfläche liegen, die sich von der Prallfläche in Richtung zu der Zulaufeinrichtung hin erweiternd zu einem äußeren Rand des Düsenkopfes erstreckt, wobei die Einhüllendenfläche vorzugsweise eine becherförmige, weiter bevorzugt eine konische Fläche ist. Bei dieser Anordnung wird nicht nur eine großflächige, sondern auch eine räumliche Verteilung der Mündungen der Kanäle in dem Düsenkopf erreicht, was zu einer weiteren Verbesserung der Durchmischung der aus den Kanälen austretenden Strömungen mit der von der Zulaufeinrichtung kommenden Strömung führt.

Eine weitere vorteilhafte Ausgestaltung des erfindungsgemäßen Kavitationsreaktors ist dadurch gekennzeichnet, dass der Düsenkopf austauschbar ausgebildet ist. Auch dies trägt zur Flexibilität bei der Ausgestaltung der Vorrichtung und zu einer vereinfachten Handhabung bei.

Eine weitere vorteilhafte Ausgestaltung des erfindungsgemäßen Kavitationsreaktors ist dadurch gekennzeichnet, dass der Düsenkopf auf einer Halterung gelagert ist, die eine mittige Durchtrittsöffnung für die Einleitung der Zugabe-Komponente in den Düsenkopf aufweist, wobei die Durchtrittsöffnung über Verbindungskanäle mit jeweils einer Einlassöffnung zur Zufuhr jeweils einer Zugabe-Komponente in die Verbindungskanäle verbunden ist. Im Falle von mehreren Zugabe-Komponenten werden in vorteilhafter Weise diese bereits in den Verbindungskanälen vor gemischt und dann gemeinsam durch den Düsenkopf in den Reaktionsraum zugeführt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: einen schematischen Schnitt durch ein Ausführungsbeispiel des erfindungsgemäßen Kavitationsreaktors;
- Figur 2: eine Draufsicht auf einen Düsenkopf mit Blickrichtung entlang der Hauptströmungsrichtung;
- Figur 3: einen Schnitt durch den Düsenkopf von Figur 2 entlang der Linie A - A;
- Figur 4: eine Draufsicht auf eine Halterung für den Düsenkopf; und
- Figur 5:: einen Schnitt durch die Halterung für den Düsenkopf.

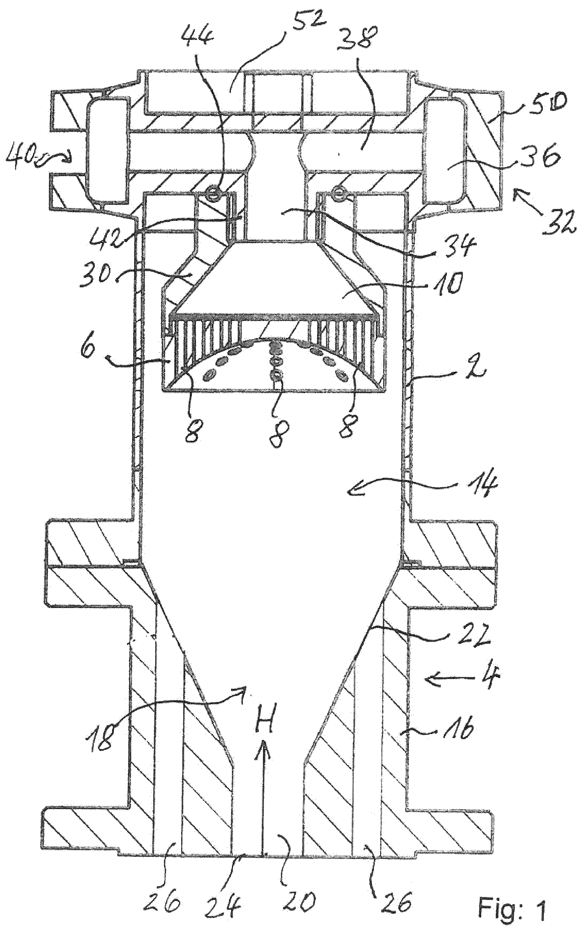

Gemäß Figur 1 umfasst der erfindungsgemäße Kavitationsreaktor zur Behandlung von fließfähigen Substanzen mittels Kavitation ein rohrförmiges Gehäuse 2, das als zylindrisches Rohr ausgebildet ist und mit dem in Strömungsrichtung H stromab eine Zulaufeinrichtung 4 verbunden ist, die die zugeführte Haupt- Komponente abgibt. In dem Gehäuse 2 ist ein Düsenkopf angeordnet, der der Zulaufeinrichtung 4 mittig gegenüberliegt. Der Düsenkopf 6 hat mehrere Kanäle 8, deren Mündungen unter unterschiedlichen radialen Abständen zu einer Mittelachse des Düsenkopfes 6 liegen und zur Abgabe einer Zugabe-Komponente oder mehrerer Zugabe-Komponenten entgegen der Strömungsrichtung H der Haupt-Komponente einen Reaktionsraum 14 dienen, der durch die Beabstandung der Zulaufeinrichtung 4 von dem Düsenkopf 6 in dem Gehäuse 2 gebildet wird. Die Kanäle werden über eine Zufuhrkammer 10 gespeist.

Die Zulaufeinrichtung 4 hat in einem Zulaufgehäuse 16 einen mittigen Zulaufkanal 18, der eintrittsseitig einen zylindrischen Kanalabschnitt 20 und einen daran in Strömungsrichtung H anschließenden, im Querschnitt konischen Erweiterungsabschnitt 22 aufweist, der bis zu dem rohrförmigen Gehäuse 2 reicht. Die Haupt-Komponente wird durch eine Eintrittsmündung vierundzwanzig in den Kanalabschnitt zwanzig eingeleitet.

Das Zulaufgehäuse 16 hat mehrere, beispielsweise vier, parallel zur Strömungsrichtung H verlaufende Hilfs-Zufuhrkanäle 26, die eintrittsseitig unter radialen Abständen zu dem Kanalabschnitt 20 liegen und in dem konischen Erweiterungsabschnitt 22 enden.

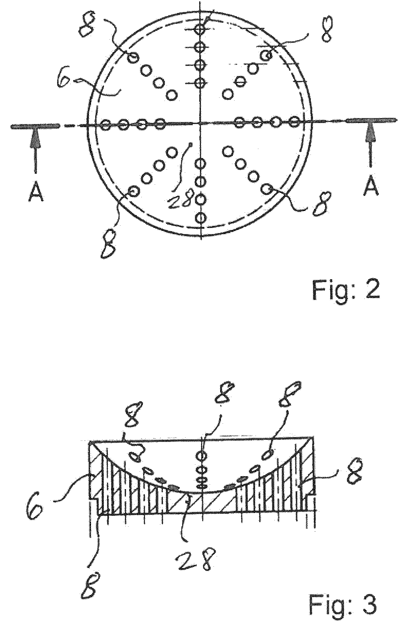

Wie aus den Figuren 2 und 3 zu ersehen ist, ist in der Mitte des Düsenkopfes 6 eine Prallfläche 28 ohne Kanäle für den von der Zulaufeinrichtung 4 abgegebenen Strahl vorgesehen. Die Kanäle 8 des Düsenkopfes 6 außerhalb der Prallfläche 28 sind auf Kreisen mit unterschiedlichen Radien zu der Mittelachse des Düsenkopfes 6 angeordnet. Ferner liegen die Mündungen der Kanäle 8 auf einer Einhüllendenfläche, die eine becherförmige, vorzugsweise konische Fläche ist und die sich von der Prallfläche 28 in Richtung zu der Zulaufeinrichtung 4 hin erweiternd zu einem äußeren Rand des Düsenkopfes 6 erstreckt.

Der Düsenkopf 6 ist austauschbar, indem der Düsenkopf 6 über einen Sockel 30 auf einer Halterung 32 gelagert ist, die eine mittige Durchtrittsöffnung 34 für die Einleitung der Zugabe-Komponente(n) in den Düsenkopf 6 aufweist, wobei die Durchtrittsöffnung 34 über Verbindungskanäle 36,38 mit einer Einlassöffnung 40 oder mehreren Eintrittsöffnungen im Fall von mehreren Zugabe-Komponenten zur Zufuhr der Zugabe-Komponente(n) nun an die Verbindungskanäle 36,38 verbunden ist. Wenn mehrere Zugabe-Komponenten eingesetzt werden, ist jeweils eine Einlassöffnung zur Zufuhr jeweils einer Zugabe-Komponente vorgesehen. Der Sockel 30 ist auf einen Bund 42 der Halterung 32 aufgesetzt und über eine Ringsdichtung 44 abgedichtet.

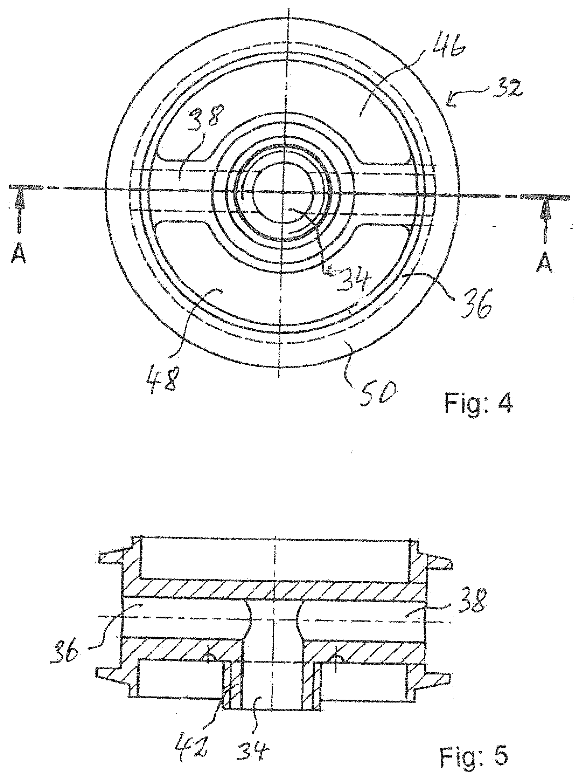

In Figur 4 ist eine Draufsicht auf die Halterung 32 mit dem Bund für den Sockel 30 des Düsenkopfes 6 gezeigt. Die Verbindungskanäle 36,38 umfassen einen Ringskanal 36, mit dem die Einlassöffnung(en) verbunden ist/sind, und einen diagonal zu der Halterung 30 verlaufenden, geraden Verbindungskanal 38, wobei der Verbindungskanal 38 den Ringskanal 36 mit der Durchtrittsöffnung 34 verbindet. Die in Figur 1 im Schnitt gezeigten Verbindungskanäle 36,38 sind in Figur 4 durch gestrichelte Linien angedeutet. Aus Figur 4 ist ferner zu ersehen, dass die fließfähige Substanz durch Austrittsöffnungen 46,48 aus dem erfindungsgemäßen Kavitationsreaktor austreten kann.

In Figur 5 ist ein Schnitt durch einen Teil der Halterung 32 des Düsenkopfes 6 darstellt, welcher durch einen Außenring 50, der in den Figuren 1 und 4 gezeigt ist, zur kompletten Halterung 32 vervollständigt wird. Die behandelte die fließfähige Substanz verlässt den Kavitationsreaktor über die Austrittsöffnungen 46,48 und eine Haupt-Austrittsöffnung 52.

Bei dem erfindungsgemäßen Kavitationsreaktor werden mittels turbulenter Strömungen in dem Reaktionsraum hydrodynamische Kräftefelder aufgebaut, die zur Kavitation bzw. Superkavitation führen und die vielfältig genutzt werden können: Zum einen kann es zur physikalischen Vermischung von schwer mischbaren und/oder lösbaren Komponenten, z. B. hydrophoben und hydrophilen Gemischen wie Wasser/Öl, Milch/Fett, Kraftstoff/Wasser, herangezogen werden. Zum anderen kann die Kavitation eingesetzt werden, um chemische Reaktionen zwischen wenigstens zwei Komponenten einzuleiten oder wenigstens durch die innige Vermischung der Reaktionskomponenten erheblich zu beschleunigen. In Abhängigkeit von der Konzentration beigemengter bzw. gelöster Stoffe (z. B. Gase) können beispielsweise Radikale, reaktive Zwischenstoffe (wie z. B. Polyoxide) erzeugt werden, die als Katalysatoren sowie als Reaktionspartner sowohl Abbau, Aufbau oder Umbau molekularer Verbindungen benutzt werden können. Damit werden Reaktionen von unter Standardbedingungen inkompatiblen (z. B. nicht mischbaren) Komponenten ermöglicht. Allgemeine Beispiele solcher Reaktionen umfassen das Mischen, Emulgieren, Dispergieren, Homogenisieren, und Begasen in Systemen, die Komponenten in Form von fest-flüssig, flüssig-fest, flüssig-flüssig, gasförmig-flüssig, flüssig-gasförmig Phasen umfassen.

## Patentansprüche

1. Kavitationsreaktor zum Behandeln von fließfähigen Substanzen, wobei dem Kavitationsreaktor wenigstens zwei Reaktionskomponenten zugeführt, gemischt und zur Reaktion gebracht werden, wobei der Kavitationsreaktor umfasst:
ein rohrförmiges Gehäuse (2), mit dem in Strömungsrichtung (H) stromab eine Zulaufeinrichtung (4) verbunden ist, die die zugeführte Haupt-Komponente als mittig in dem Gehäuse (2) verlaufenden Strahl in Strömungsrichtung (H) abgibt, und in dem ein der Zulaufeinrichtung (4) mittig gegenüberliegender Düsenkopf (6) angeordnet sind, der mehrere Kanäle aufweist, deren Mündungen unter unterschiedlichen radialen Abständen zu einer Mittelachse des Düsenkopfes (6) liegen und durch die wenigstens eine Zugabe-Komponente entgegen der Strömungsrichtung (H) der Haupt-Komponente zuzuführen ist,
wobei durch die Beabstandung der Zulaufeinrichtung (4) von dem Düsenkopf (6) ein Reaktionsraum (14) in dem Gehäuse (2) gebildet ist, und wobei
die Zulaufeinrichtung (4) ein Zulaufgehäuse (16) mit einem mittigen Zulaufkanal (18) aufweist, der sich von einer eintrittsseitigen Zulauföffnung (24) aus mit einem in Strömungsrichtung (H) trichterförmig ausgebildeten Erweiterungsabschnitt (22) bis zu dem rohrförmigen Gehäuse (2) erstreckt.

2. Kavitationsreaktor nach Anspruch 1, **dadurch gekennzeichnet, dass** der Zulaufkanal (18) eintrittsseitig einen zylindrischen Kanalabschnitt (20) aufweist, an den sich in Strömungsrichtung (H) der Erweiterungsabschnitt (22) anschließt, wobei die Zulaufeinrichtung (4) eine mittig in das Gehäuse (2) gerichtete Strömung der Haupt-Komponente abgibt.

3. Kavitationsreaktor nach Anspruch 1 oder 2, **dadurch gekennzeichnet, dass** das Zulaufgehäuse (16) mehrere parallel zur Strömungsrichtung (H) verlaufende Hilfs-Zulaufkanäle (26) aufweist, die eintrittsseitig unter radialen Abständen zu dem mittigen Zulaufkanal (18) liegen und in dem konischen Erweiterungsabschnitt (22) enden.

4. Kavitationsreaktor nach Anspruch 1, **dadurch gekennzeichnet, dass** das Gehäuse (2) als zylindrisches Rohr ausgebildet ist,.

5. Kavitationsreaktor nach Anspruch 1, **dadurch gekennzeichnet, dass** in der Mitte des Düsenkopfes (6) eine Prallfläche (28) ohne Kanäle für die von der Zulaufeinrichtung (4) abgegebenen Strömung vorgesehen ist.

6. Kavitationsreaktor nach Anspruch 5, **dadurch gekennzeichnet, dass** die Kanäle (8) des Düsenkopfes (6) außerhalb der Prallfläche (28) auf Kreisen mit unterschiedlichen Radien zu der Mittelachse des Düsenkopfes (6) angeordnet sind.

7. Kavitationsreaktor nach Anspruch 6, **dadurch gekennzeichnet, dass** die Mündungen der Kanäle (8) auf einer Einhüllendenfläche liegen, die sich von der Prallfläche sich in Richtung zu der Zulaufeinrichtung (4) hin erweiternd zu einem äußeren Rand des Düsenkopfes (6) erstreckt.

8. Kavitationsreaktor nach Anspruch 7, **dadurch gekennzeichnet, dass** die Einhüllendenfläche eine becherförmige, vorzugsweise konische Fläche ist.

9. Kavitationsreaktor einem der vorhergehenden Ansprüche, **dadurch gekennzeichnet, dass** der Düsenkopf (6) austauschbar ausgebildet ist.

10. Kavitationsreaktor einem der vorhergehenden Ansprüche, **dadurch gekennzeichnet, dass** der Düsenkopf (6) auf einer Halterung (32) gelagert ist, die eine mittige Durchtrittsöffnung (34) für die Einleitung der Zugabe-Komponente(n) in den Düsenkopf (6) aufweist, wobei die Durchtrittsöffnung (34) über Verbindungskanäle (36,38) mit jeweils einer Einlassöffnung (40) zur Zufuhr jeweils einer Zugabe-Komponente in die Verbindungskanäle (36,38) verbunden ist.
